# EUROPEAN PATENT APPLICATION

(11) **EP 4 269 128 A1**
(43) Date of publication of application: **01.11.2023**
(21) Application number: 21909477.8
(22) Date of filing: 22.12.2021
(51) Int. Cl.: B60B 7/06, B60B 7/00, B60B 19/00

(54) **INSERT, PROTECTION DEVICE, WHEEL AND VEHICLE**

(30) Priority: 25.12.2020 CN 202023201751 U; 23.04.2021 CN 202110442065
(71) Applicant: Human Horizons (Jiangsu) Technology Co., Ltd., Yancheng, Jiangsu 224000 (CN)
(72) Inventor: CHEN, Shaoping, Shanghai 201112 (CN); YUWEN, Jia, Shanghai 201112 (CN); ZOU, Hanlin, Shanghai 201112 (CN); WANG, Yang, Shanghai 201112 (CN)
(74) Representative: Hannke Bittner & Partner mbB Regensburg
(86) International application number: PCT/CN2021/140517
(87) International publication number: WO 2022/135482

(57) **Abstract**

The present application relates to an insert, a protection device, a wheel and a vehicle. The insert is used for a wheel, the wheel comprises a rim, spokes, and a tire, and the insert comprises: a body provided on the rim and/or the spokes; and a protection portion provided on the body, the protection portion at least partially shielding an outer surface of the tire. The technical solution of the embodiments of the present application can form a certain protection effect on a tire of a wheel, improve the reliability and safety of the wheel, and further improve the aesthetic appearance of the wheel.

## Description

The present application claims the priority of Chinese patent application No. 202023201751.X, filed with the China Patent Office on December 25, 2020 and entitled "INSERT FOR VEHICLE WHEEL", which is incorporated into the present application by reference in its entirety. The present application claims the priority of Chinese patent application No. 202110442065.1, filed with the China Patent Office on April 23, 2021 and entitled "PROTECTION DEVICE, VEHICLE WHEEL, AND VEHICLE", which is incorporated into the present application by reference in its entirety.

### TECHNICAL FIELD

The present application relates to the technology field of vehicles, and in particular to an insert, a protection device, a vehicle wheel, and a vehicle.

### BACKGROUND

A vehicle wheel is a rotating assembly that is between a tire and a vehicle axle and bears a load. The vehicle wheel usually consists of two main components, that is, a wheel rim and a wheel spoke. The wheel rim is a component that is installed on the vehicle wheel and supports a tire. The wheel spoke is a support component on the vehicle wheel and between the vehicle axle and the wheel rim. In addition to the aforementioned components, the vehicle wheel sometimes also includes a wheel hub.

In related technologies, an insert used for the vehicle wheel usually does not exceed the radius of the wheel rim, and the insert has a certain limitation on the appearance effect presented by the vehicle wheel. Moreover, when the vehicle wheel is scratched during the vehicle driving, the sidewall of the tire may also be damaged.

### SUMMARY

Embodiments of the present application provide an insert, a protection device, a vehicle wheel, and a vehicle, to solve the problem existing in the related technologies. The technical solutions are as follows.

According to the first aspect of the embodiments of the present application, an insert is provided. The insert is used for a vehicle wheel, wherein the vehicle wheel includes a wheel rim, a wheel spoke, and a tire, and the insert includes:
a body, provided on the wheel rim and/or the wheel spoke; and
a protection portion, provided on the body, wherein at least part of the protection portion shields an outer surface of the tire.

In one implementation, the material of the body is a hard material, and the material of the protection portion is a soft material.

In one implementation, the body and the protection portion are integrally processed and formed through a double-shot injection molding process.

In one implementation, an arc-shaped transition face is formed between an inner circumference wall of the wheel rim and an outer surface of the wheel rim, the body or the protection portion is provided with a support protrusion, and an outer surface of the support protrusion is constructed as an arc shape, such that the outer surface of the support protrusion is attached to the transition face.

In one implementation, a groove is formed between the transition face and the outer surface of the tire, an embedding protrusion is formed on the outer surface of the support protrusion, and the embedding protrusion is clamped in the groove.

In one implementation, there are multiple support protrusions, and the multiple support protrusions are spaced along the circumference direction of the wheel rim.

In one implementation, the protection portion includes a first section and a second section that are connected, wherein the first section covers an outer surface of the body, and at least part of the second section shields the outer surface of the tire.

In one implementation, the body is installed on the wheel spoke, wherein the body is connected to the wheel spoke through a fastener; and/or, a contact face of the body and a contact face of the wheel spoke are connected by adhesive.

In one implementation, the inner surface of the body is provided with a reinforcing rib.

According to the second aspect of the embodiments of the present application, a protection device is provided. The protection device includes at least one insert according to the above embodiment of the present application.

In one implementation, there are multiple inserts and the multiple inserts are spaced in a circumference direction of a vehicle wheel.

In one implementation, the multiple inserts have a same shape and size.

In one implementation, any two adjacent inserts have different shapes and/or sizes.

In one implementation, the multiple inserts are connected to each other and processed through an integrated molding process.

According to the third aspect of the embodiments of the present application, a vehicle wheel is provided. The vehicle wheel includes:
a wheel rim, a wheel spoke, and a tire, wherein the tire is sleeved on an outer circumference wall of the wheel rim; and
the protection device according to the above embodiment of the present application.

In one implementation, the wheel spoke includes multiple spoke plates, a window region is defined between the wheel rim and any two adjacent spoke plates, the body and/or the protection portion are defined with a stream guidance region, and the stream guidance region runs through the insert in a thickness direction of the insert, such that the stream guidance region is in communication with the window region.

In one implementation, at least part of the circumference wall of the stream guidance region tilts in the direction towards the center of the stream guidance region to form a stream guidance face.

According to the fourth aspect of the embodiments of the present application, a vehicle is provided. The vehicle includes the vehicle wheel according to the above embodiment of the present application.

The insert according to the embodiment of the present application may form a certain protection effect on the tire of the vehicle wheel, thereby improving the reliability and safety of the vehicle wheel, and also improving the aesthetic appearance of the vehicle wheel.

The above summary is merely for the purpose of illustration, and is not intended to be limited in any way. In addition to the illustrative aspects, implementations, and features described above, further aspects, implementations, and features of the present application will be readily apparent by reference to the drawings and detailed descriptions below.

### BRIEF DESCRIPTION OF THE DRAWINGS

In the drawings, the same reference numerals denote the same or similar components or elements throughout multiple drawings unless otherwise specified. These drawings are not necessarily drawn to scale. It should be understood that these drawings depict only some implementations disclosed according to the present application, and should not be construed as limiting the scope of the present application.
FIG. 1 shows a schematic structural diagram of installing an insert of a protection device on a vehicle wheel according to an embodiment of the present application;
FIG. 2 shows a schematic cross-sectional diagram of installing an insert of a protection device on a vehicle wheel according to an embodiment of the present application;
FIG. 3 shows a schematic structural diagram of a first insert of a protection device according to an embodiment of the present application;
FIG. 4 shows a schematic structural diagram of a first insert of a protection device according to an embodiment of the present application;
FIG. 5 shows a side view of a first insert of a protection device according to an embodiment of the present application;
FIG. 6 shows a schematic structural diagram of a body of a first insert of a protection device according to an embodiment of the present application;
FIG. 7 shows a schematic structural diagram of a body of a first insert of a protection device according to an embodiment of the present application;
FIG. 8 shows a schematic structural diagram of a protection portion of a first insert of a protection device according to an embodiment of the present application;
FIG. 9 shows a schematic structural diagram of a protection portion of a first insert of a protection device according to an embodiment of the present application;
FIG. 10 shows a schematic structural diagram of a second insert of a protection device according to an embodiment of the present application;
FIG. 11 shows a schematic structural diagram of a third insert of a protection device according to an embodiment of the present application; and
FIG. 12 shows a schematic structural diagram of a vehicle wheel according to an embodiment of the present application.

### DETAILED DESCRIPTION

In the following, only certain exemplary embodiments are briefly described. As can be recognized by those skilled in the art, the described embodiments may be modified in various different ways without departing from the spirit or scope of the present application. Therefore, the drawings and the description are regarded as exemplary intrinsically rather than restrictive.

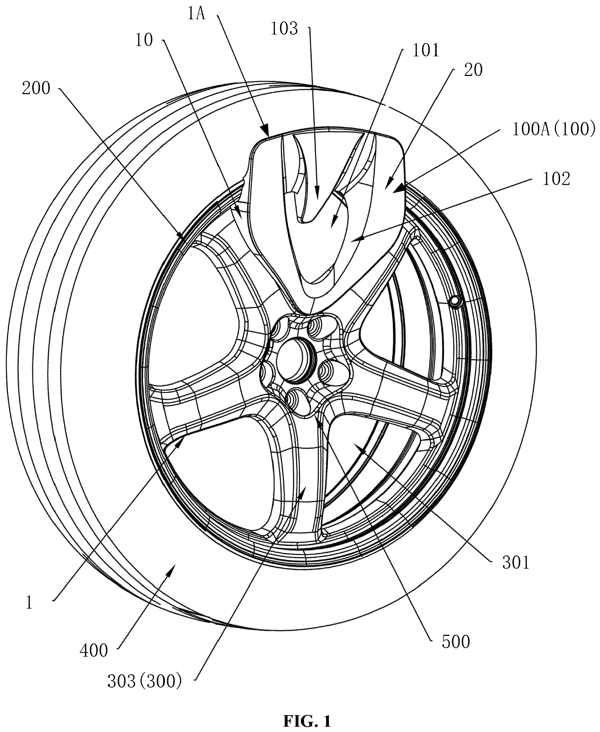

An insert 100 according to the embodiments of the present application is described with reference to FIGS. 1 to 12 below. The insert 100 of the embodiments of the present application may be used for a vehicle wheel 1. Herein, the vehicle wheel 1 may include a wheel rim 200, a wheel spoke 300, and a tire 400, and the tire 400 is sleeved on the outer circumference wall of the wheel rim 200.

As shown in FIG. 1, the insert 100 includes a body 10 and a protection portion 20.

Specifically, the body 10 is provided on the wheel rim 200 and/or the wheel spoke 300. The protection portion 20 is provided on the body 10, and at least part of the protection portion 20 shields the outer surface 401 of the tire 400.

More specifically, the body 10 may be provided on the outer surface of the wheel rim 200 and/or the wheel spoke 300, and the protection portion 20 may be provided on the outer surface of the body 10.

Herein, the outer surface of the wheel rim 200 and/or the wheel spoke 300 refers to a surface, on the side away from the vehicle body, of the wheel rim 200 and/or the wheel spoke 300. The outer surface of the body 10 refers to a surface, on the side away from the wheel rim 200 or the wheel spoke 300, of the body 10. The outer surface 401 of the tire 400 refers to a surface, that is perpendicular to the horizontal plane and is on the side away from the vehicle body, of the tire 400.

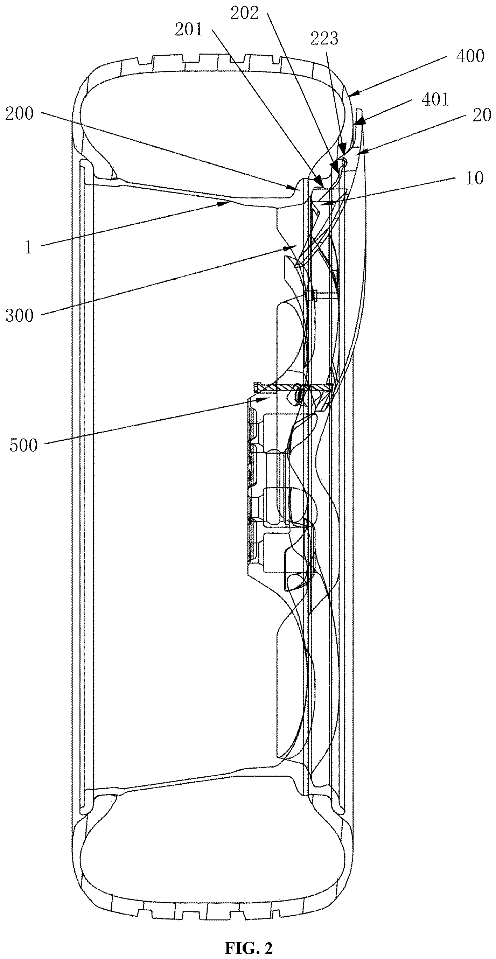

Exemplarily, in the examples shown in FIGS. 1 and 2, the body 10 may be provided on the wheel rim 200 and the wheel spoke 300 together, that is, the body 10 covers the outer surface of the wheel rim 200 and the wheel spoke 300. In other examples of the present application, the body 10 may also be separately provided on the wheel rim 200 or separately provided on the wheel spoke 300.

The protection portion 20 is connected to the body 10, and at least part of the protection portion 20 shields the outer surface 401 of the tire 400, to form a certain protection effect on the outer surface 401 of the tire 400. It can be understood that at least part of the protection portion 20 may only cover a part of the outer surface of the tire 400, or cover the entire outer surface 401 of the tire 400, which will be not specifically limited in the embodiments of the present application.

It should be noted that the protection portion 20 may be attached to the outer surface 401 of the tire 400, or may be spaced from the outer surface 401 of the tire 400.

In order to avoid the deformation of the tire 400 due to changes in the tire pressure and the deformation of the protection portion 20 caused by the deformation of the tire 400, preferably, the protection portion 20 is spaced from the outer surface 401 of the tire 400, that is, there is a certain gap between the protection portion 20 and the outer surface 401 of the tire 400. Therefore, it can prevent the protection portion 20 from deforming along with the tire 400, thus improving the structural stability and reliability of the protection portion 20.

According to the insert 100 of the embodiments of the present application, the protection portion 20 is provided on the outer surface of the body 10, and at least part of the protection portion 20 forms shielding against the outer surface 401 of the tire 400, so as to reduce the probability of damage to the tire 400 when the vehicle wheel 1 is scratched, thereby forming a certain protection effect on the tire 400, and improving the reliability of the vehicle wheel 1 and the driving safety of the vehicle. Furthermore, by extending at least part of the protection portion 20 to a position directly opposite to the tire 400, the overall size of the insert 100 may be increased to a certain extent, thereby visually increasing the size of the vehicle wheel 1 and improving the aesthetic appearance of the vehicle wheel 1. In addition, the insert 100 of the embodiments of the present application only needs to be installed on the wheel rim 200 and/or the wheel spoke 300, such that the protection effect on the wheel rim 200 and/or the wheel spoke 300 as well as the tire 400 can be achieved, which has the advantages of simple structure and easy installation.

In one implementation, the material of the body 10 is a hard material, and the material of the protection portion 20 is a soft material.

Exemplarily, the material of the body 10 may be a plastic alloy, and the material of the protection portion 20 may be thermoplastic vulcanized rubber.

Through the above implementation, the body 10 may have better hardness, thereby improving the structural strength of the body 10, and the protection portion 20 may have stronger flexibility to improve the protection performance of the protection portion 20 on the vehicle wheel 1. In addition, when the vehicle wheel 1 collides or scratches with the outside world, the protection portion 20 has certain elastic deformation ability, thereby ensuring that the protection portion 20 will not be damaged due to deformation.

In one implementation, the body 10 and the protection portion 20 are formed as an integral part or are separated parts.

Exemplarily, the body 10 and the protection portion 20 may be integrally formed through an injection molding process. For another example, the body 10 and the protection portion 20 may be separately molded by injection molding, and then the body 10 is connected to the protection portion 20 by means of gluing, clamping, or the like. Herein, the material of the body 10 may be same as or different from the material of the protection portion 20.

Preferably, the body 10 and the protection portion 20 are formed as an integral part, and the body 10 and the protection portion 20 are integrally processed and formed through a double-shot injection molding process.

It can be understood that the double-shot injection molding process refers to a forming process of injecting two different materials into a same mold, to achieve that the injection-molded part is formed from two different materials. Herein, the two materials may be of different colors or have different soft and hard textures, thereby improving the aesthetics, assembly performance, etc., of the product.

Through the above implementation, the processing difficulty of the insert 100 is reduced and the processing efficiency of the insert 100 is improved.

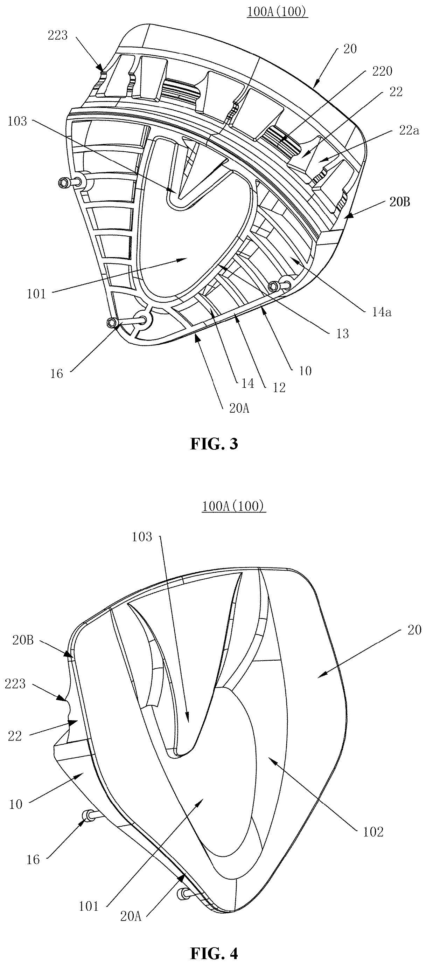

As shown in FIGS. 3 to 5, in one implementation, the protection portion 20 includes a first section 20A and a second section 20B that are connected. The first section 20A is attached to the outer surface of the body 10, and at least part of the second section 20B covers the outer surface 401 of the tire 400.

Exemplarily, the first section 20A and the second section 20B are arranged along the radial direction of the wheel rim 200, and the second section 20B is connected to the side, away from the center of the vehicle wheel 1, of the first section 20A. Herein, the inner surface of the first section 20A is attached to the outer surface of the body 10. At least part of the second section 20B is provided directly opposite to the outer surface 401 of the tire 400, to shield the outer surface 401 of the tire 400. More specifically, the second section 20B may shield the wheel rim 200 and the outer surface 401 of the tire 400 together, or the second section 20B only shields the outer surface 401 of the tire 400.

It should be noted that the first section 20A and the second section 20B may be formed as an integral part, or may be parts spaced from each other.

In an example, the first section 20A and the second section 20B are processed through an integrated molding process. For example, the first section 20A and the second section 20B may be integrally formed through an injection molding process.

In another example, the first section 20A and the second section 20B may be separately processed and formed, and then connected by means of gluing, clamping, or the like.

According to the above implementation, providing the first section 20A and the second section 20B may not only provide a protection effect on the tire 400 to a certain extent, but also provide a protection effect on the outer surface of the body 10 to a certain extent, to avoid direct scratching between the outer surface of the body 10 and the outside world when the vehicle wheel 1 is scratched with the outside world, thereby improving the protection effect of the insert 100.

As shown in FIGS. 2 and 3, in one implementation, an arc-shaped transition face 202 is formed between the inner circumference wall 201 of the wheel rim 200 and the outer surface of the wheel rim 200. The body 10 or the protection portion 20 is provided with a support protrusion 22, and the outer surface of the support protrusion 22 is constructed as an arc shape, such that the outer surface of the support protrusion 22 is attached to the transition face 202.

In an example, the support protrusion 22 is provided on the protection portion 20, and the support protrusion 22 is formed by the outward protrusion of the inner surface of the second section 20B. For example, the support protrusion 22 may be constructed as a shape of convex strip. Herein, the outer surface of the support protrusion 22 is attached to the wheel rim 200, to provide a certain support effect on the wheel rim 200.

In another example, the support protrusion 22 may be provided on the body 10, and the support protrusion 22 is formed by the outward protrusion of the inner surface of the body 10.

It should be noted that the shape of the outer surface of the support protrusion 22 may be provided according to the actual structure of the wheel rim 200.

Exemplarily, the structure of the wheel rim 200 may be a deep groove wheel rim 200. Specifically, the wheel rim 200 is formed as an integral part, and a groove is formed in the middle of the cross section of the wheel rim 200 and is used for embedding and installing the tire 400. Moreover, shoulders are formed on both sides of the cross section of the wheel rim 200, and the shoulders tilt towards the middle at a small angle. And, the outer surfaces of the shoulders of the wheel rim 200 form a transition face 202 that connects the inner circumference wall 201 of the wheel rim 200 and the outer surface of the wheel rim 200, and the transition face 202 is constructed as an arc shape.

In order to increase the contact area between the outer surface of the support protrusion 22 and the transition face 202 of the wheel rim 200, thereby improving the support effect of the support protrusion 22 on the wheel rim 200, the outer surface of the wheel rim 200 is constructed as an arc-shaped face that is matched with the shape of the transition face 202.

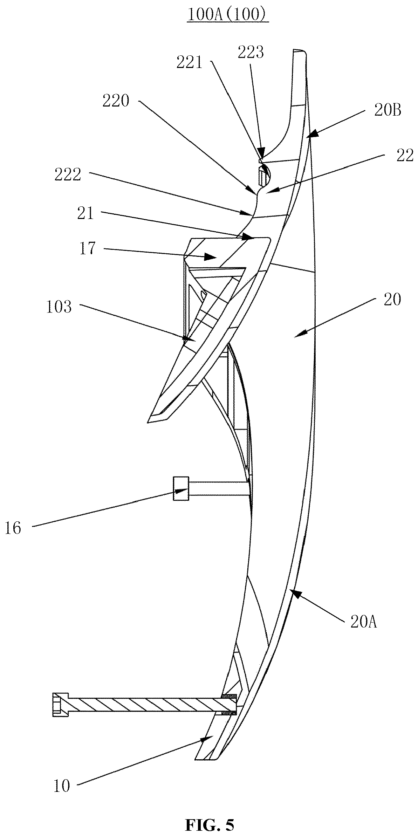

In a specific example, as shown in FIG. 2 and FIG. 5, the transition face 202 of the wheel rim 200 is constructed as a multi-segment arc-shaped face 220. Correspondingly, the outer surface of the support protrusion 22 is also constructed as a shape matched multi-segment arc-shaped face 220, and the multi-segment arc-shaped face 220 includes a first arc-shaped face 221 and a second arc-shaped face 222 that are connected.

According to the above implementation, by providing the support protrusion 22 on the second section 20B, the contact area between the second section 20B and the wheel rim 200 may be increased, thereby improving the connection stability between the second section 20B and the wheel rim 200. Therefore, when the vehicle wheel 1 is scratched with the outside world, excessive stress concentration between the second section 20B and the wheel rim 200 may be avoided, thereby improving the protection effect on the vehicle wheel 1.

As shown in FIGS. 2 to 5, in one implementation, a groove is formed between the transition face 202 and the outer surface 401 of the tire 400, a clamping protrusion 223 is formed on the outer surface of the support protrusion 22, and the clamping protrusion 223 is clamped in the groove.

According to the above implementation, by providing the clamping protrusion 223 on the support protrusion 22, a certain filling effect may be formed on the groove between the transition face 202 and the outer surface 401 of the tire 400, thereby providing a certain support effect on the tire 400, reducing the deformation of the tire 400 relative to the wheel rim 200, and improving the durability and reliability of the tire 400.

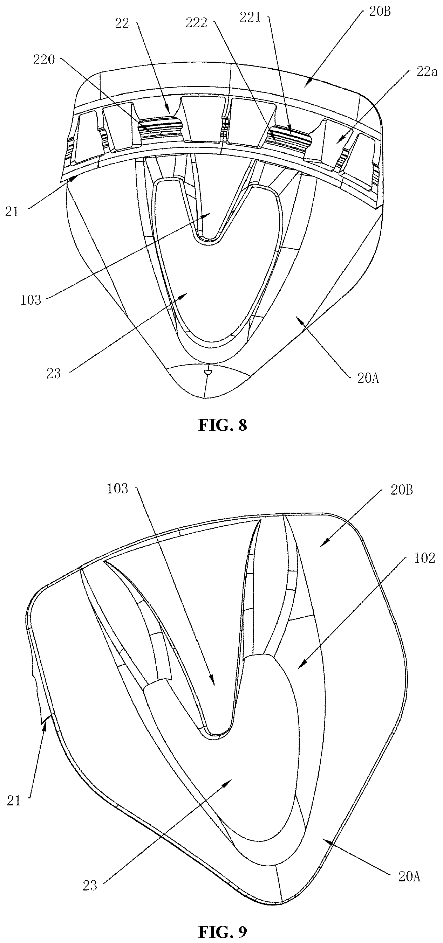

As shown in FIGS. 3 and 8, in one implementation, there are multiple support protrusions 22, and the multiple support protrusions 22 are spaced along the circumference direction of the wheel rim 200.

Exemplarily, the width direction of the second section 20B may be arranged along the circumference direction of the wheel rim 200, and the multiple support protrusions 22 are spaced in the width direction of the second section 20B. Herein, the shapes of the respective support protrusions 22 may be same or different, and the sizes of the support protrusions 22 in the width direction of the second section 20B may also be same or different. Further, a first groove 22a is provided between two adjacent support protrusions 22, and the first groove 22a is formed by sinking of the inner surface of the second section 20B.

According to the above implementation, by providing the spaced multiple support protrusions 22, the material cost of the protection portion 20 is reduced, and it is beneficial to reduce the weight of the protection portion 20, thereby reducing the weight of the insert 100 as a whole, and meeting the requirement of lightweight of the insert.

In one implementation, the body 10 is installed on the wheel spoke 300. Herein, the body 10 is connected to the wheel spoke 300 through a fastener 16; and/or, a contact face of the body 10 and a contact face of the wheel spoke 300 are connected by adhesive.

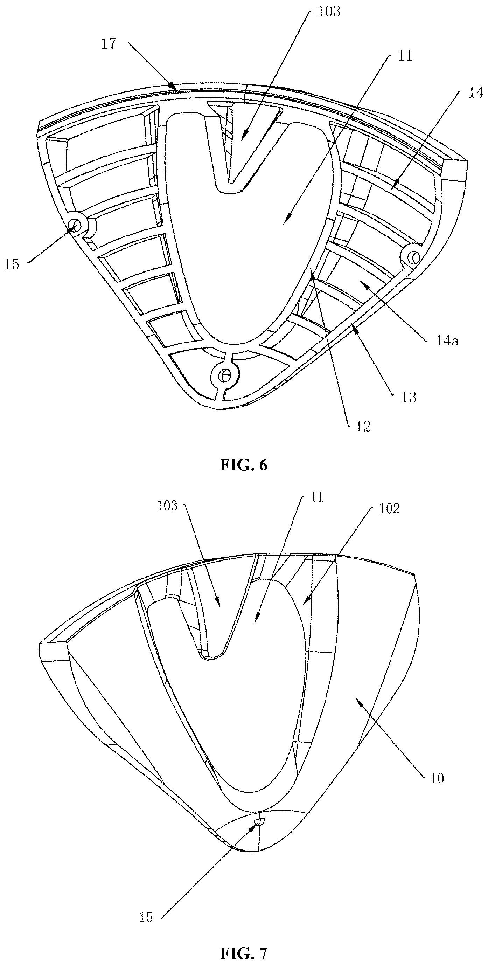

In an example, as shown in FIGS. 5 and 6, the inner surface of the body 10 is provided with multiple fixing holes 15, and the multiple fixing holes 15 are respectively provided adjacent to the outer edge 13 of the body 10. The fastener 16 passes through the wheel spoke 300 and is securely connected to the fixing hole 15, to achieve the fixation of the body 10 on the wheel spoke 300. Herein, the fixing hole 15 may specifically be a screw hole, and the fastener 16 may specifically be a screw.

In another example, the contact face of the body 10 and the contact face of the wheel spoke 300 may also be connected by adhesive. Specifically, the contact face of the body 10 and the contact face of the wheel spoke 300 may be connected by 3M adhesive, to achieve the fixation of the body 10 on the wheel spoke 300.

In other examples of the present application, the inner surface of the body 10 may also be provided with a jack catch (not shown in the figure). Herein, there may be multiple jack catches and the multiple jack catches may be respectively provided on two side edges in the width direction of the body 10. Herein, the jack catches may be clamped to two wheel spokes 300 corresponding to the two side edges of the body 10 through elastic deformation, to achieve the fixed connection of the body 10 on the wheel spokes 300.

As shown in FIGS. 3 and 6, in one implementation, the inner surface of the body 10 is provided with a reinforcing rib 14.

Exemplarily, the body 10 has an inner edge 12 and an outer edge 13, the inner surface of the body 10 is provided with the reinforcing rib 14, and the reinforcing rib 14 is connected between the inner edge 12 and the outer edge 13 of the body 10. Specifically, the inner edge 12 of the body 10 defines a first through hole 11, and the reinforcing rib 14 is formed by the protrusion of the inner surface of the body 10 along the direction towards the vehicle wheel 1. The shape of the reinforcing rib 14 is strip-shaped, and the length direction of the reinforcing rib 14 is arranged along the width direction of the body 10. There are multiple reinforcing ribs 14, and the multiple reinforcing ribs 14 are spaced in the length direction of the body 10. A second groove 14a is formed between two adjacent reinforcing ribs 14.

It should be noted that in other examples of the present application, the shape of the reinforcing rib 14 may also be a broken line shape or an arc shape. The embodiments of the present application do not specifically limit the shape of the reinforcing rib 14.

According to the above implementation, by providing the reinforcing rib 14 on the body 10, on the one hand, the structural strength of the body 10 may be improved, thereby improving the structural reliability of the body 10; on the other hand, the material of the body 10 is reduced, thereby reducing the material cost of the insert 100 and being beneficial to reduce the overall weight of the insert 100.

As the second aspect of the embodiments of the present application, an embodiment of the present application also provides a protection device 1A, which includes the insert 100 of the above embodiment of the present application, and there is at least one insert 100.

The first embodiment of the protection device 1A is described below with reference to FIGS. 1 to 9.

In the first embodiment, there are multiple inserts 100 and the multiple inserts 100 are spaced in the circumference direction of the vehicle wheel 1. The multiple inserts 100 have the same shape and size.

In one implementation, the protection device 1A includes multiple first inserts 100A, and the multiple first inserts 100A have the same shape and size. It can be understood that the first insert 100A may adopt the same or similar structure as the insert 100 in any one of the above implementations.

As shown in FIG. 1, the wheel spoke 300 may include 5 spoke plates 302, to form 5 window regions 301 on the vehicle wheel 1. Correspondingly, there are 5 first inserts 100A, and the body 10 of each first insert 100A covers the corresponding window region 301. Herein, the body 10 of each first insert 100A is respectively installed on two spoke plates 302 of the window region 301 corresponding to the body.

According to the above implementation, by providing the multiple first inserts 100A, the comprehensive protection of the wheel rim 200 and wheel spoke 300 may be achieved, and the shielding area of the tire 400 may be increased, thereby further improving the protection effect on the tire 400.

As shown in FIGS. 8 and 9, in one implementation, the protection portion 20 of the first insert 100A is provided with a first position-limit lug boss 21. The first position-limit lug boss 21 is formed by the junction between the first section 20A and the second section 20B protruding in the direction towards the body 10 of the first insert 100A, and the inner surface of the first position-limit lug boss 21 is in a position-limit fit with the outer edge 13 of the body 10 of the first insert 100A.

Herein, the inner surface of the first position-limit lug boss 21 refers to the surface on the side, adjacent to the center of the vehicle wheel 1, of the first position-limit lug boss 21.

Exemplarily, the shape of the first position-limit lug boss 21 may be constructed as a strip shape. The first position-limit lug boss 21 may be provided on the first section 20A, and the first position-limit lug boss 21 is formed by the edge, adjacent to second section 20B, of the first section 20A protruding in the direction towards the vehicle wheel 1. Or, the first position-limit lug boss 21 may be provided on the second section 20B, and the first position-limit lug boss 21 is formed by the edge, adjacent to the first section 20A, of the second section 20B protruding in the direction towards the vehicle wheel 1. Or, the first position-limit lug boss 21 is jointly formed by the first section 20A and the second section 20B, and the first section 20A and the second section 20B are formed as an integral part.

Further, the first position-limit protrusion is constructed as an arc shape that is matched with the inner circumference wall 201 of the wheel rim 200, such that the outer surface of the first position-limit protrusion is attached to the inner circumference wall 201 of the wheel rim 200, and the inner surface of the first position-limit protrusion is attached to the edge of the body 10.

According to the above implementation, by providing the first position-limit lug boss 21 on the protection portion 20, the position-limit fit may be formed between the body 10 and the protection portion 20, thereby improving the connection strength between the body 10 and the protection portion 20, and thus improving the overall structural stability of the first insert 100A.

As shown in FIGS. 5 and 6, in one implementation, the outer edge 13 of the body 10 is provided with a second position-limit lug boss 17 protruding in the direction towards the wheel rim 200 or wheel spoke 300, and the outer surface of the second position-limit lug boss 17 is in position-limit fit the inner circumference wall 201 of the wheel rim 200.

Herein, the inner surface of the second position-limit lug boss 17 refers to the surface on the side, away from the center of the vehicle wheel 1, of the second position-limit lug boss 17.

Exemplarily, the second position-limit lug boss 17 is provided on the edge on the side, away from the center of the vehicle wheel 1, of the body 10; and the second position-limit lug boss 17 is formed by the inner surface of the body 10 protruding in the direction towards the wheel rim 200 or wheel spoke 300. Moreover, the second position-limit protrusion is constructed as an arc shape that is matched with the inner circumference wall 201 of the wheel rim 200, such that the outer surface of the second position-limit protrusion is attached to the inner circumference wall 201 of the wheel rim 200.

Further, as shown in FIG. 5, the height of the second position-limit protrusion may be greater than the height of the first position-limit protrusion, such that a part of the outer surface of the second position-limit protrusion is attached to the inner surface of the first position-limit protrusion, and another part of the outer surface of the second position-limit protrusion is attached to the inner circumference wall 201 of the wheel rim 200.

According to the above implementation, by providing the second position-limit lug boss 17 on the outer edge 13 of the body 10, a certain position-limit fit may be formed between the body 10 and the inner circumference wall 201 of the wheel rim 200, thereby improving the assembly effect of the body 10 and the wheel rim 200.

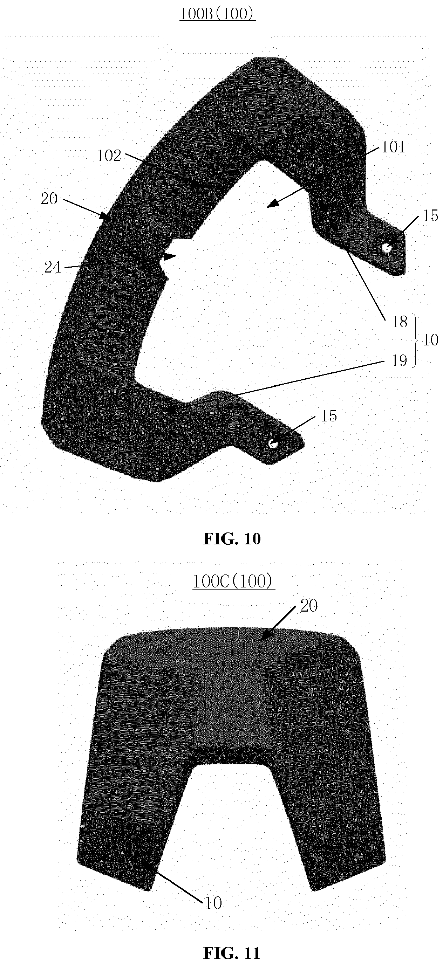

The second embodiment of the protection device 1A is described below with reference to FIGS. 10 to 12.

In the second embodiment, there are multiple inserts 100, and the multiple inserts 100 are spaced in the circumference direction of the vehicle wheel 1. Herein, any two adjacent inserts 100 have different shapes and/or sizes.

In one implementation, the protection device 1A includes multiple second inserts 100B and multiple third inserts 100C. The shapes and sizes of the second inserts 100B are different from the shapes and sizes of the third inserts 100C. The multiple second inserts 100B and the multiple third inserts 100C are alternately spaced in the circumference direction of the vehicle wheel 1. It can be understood that the second inserts 100B or the third inserts 100C may adopt the same or similar structure as the insert 100 in any one of the above implementations.

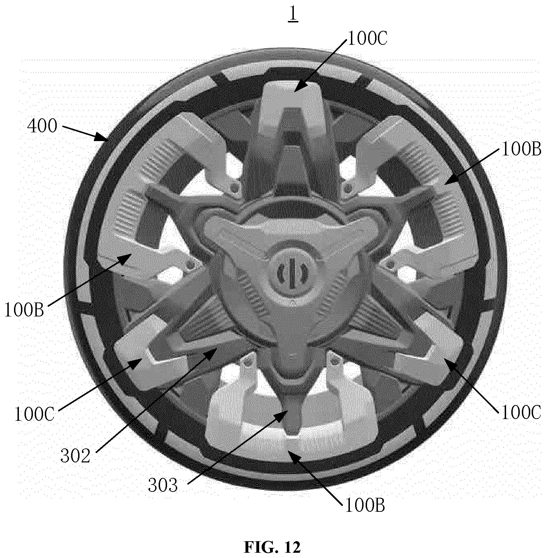

As shown in FIG. 12, in one implementation, the wheel spoke 300 includes multiple spoke plates 302 and multiple spoke strips 303, and the multiple spoke plates 302 and the multiple spoke strips 303 are alternately arranged in the circumference direction of the vehicle wheel. Each spoke strip 303 is centered between two adjacent spoke plates 302 corresponding to the spoke strip 303. The protection portion 20 of the second insert 100B shields the outer surface of the wheel spoke 300 and the outer surface of the tire 400 together. The protection portion 20 is provided with spoke strip position-limit grooves 24 corresponding to the positions of the spoke strips 303. The spoke strip position-limit grooves 24 are used to clamp the spoke strips 303, such that the position-limit fit is formed between the protection portion 20 and the spoke strips 303. Thereby, the fit effect between the protection portion 20 and the wheel spoke 300 is improved.

Further, the wheel spoke 300 includes spoke plates 302 and spoke strips 303. The multiple spoke plates 302 and spoke strips 303 are alternately arranged at intervals. Herein, each of multiple second inserts 100B is provided between two adjacent spoke plates 302, and multiple third inserts 100C is provided on the spoke plates 302 respectively.

Therefore, the distributions of the multiple second inserts 100B and the multiple third inserts 100C on the vehicle wheel 1 are relatively reasonable, and both the second inserts 100B and the third inserts 100C extend to the position of the tire 400 in the radial direction of the vehicle wheel 1, which may significantly increase the size of the wheel spoke 300 visually, thereby further improving the aesthetic appearance of the vehicle wheel 1.

As shown in FIG. 10, in one implementation, the body 10 of the second insert 100B includes a first body branch 18 and a second body branch 19. The first body branch 18 and the second body branch 19 are spaced in the circumference direction of the vehicle wheel 1.

Exemplarily, the first body branch 18 and the second body branch 19 are spaced in the circumference direction of the vehicle wheel 1. Herein, one end of the first body branch 18 and one end of the second body branch 19 are respectively provided on the wheel rim 200 or the wheel spoke 300 of the vehicle wheel 1, and the other end of the first body branch 18 and the other end of the second body branch 19 are respectively connected to the protection portion 20.

Exemplarily, the protection portion 20 may be constructed as a fan-ring shape, and the protection portion 20 is provided directly opposite to the outer surface 401 of the tire 400, to form shielding against the outer surface of the tire 400. The protection portion 20, the first body branch 18, and the second body branch 19 jointly defines a hollow stream guidance region 101. In addition, the outer surface of the protection portion 20 may be provided with a stream guidance face 102, and the stream guidance face 102 tilts inward in the direction towards the center of the vehicle wheel 1.

In a specific example, one end of the first body branch 18 and one end of the second body branch 19 are respectively provided with a fixing hole 15, which is used to fit with the fastener 16 respectively, to fix the first body branch 18 and the second body branch 19 to the wheel rim 200 or wheel spoke 300 of the vehicle wheel 1, respectively.

In one implementation, the first body branch 18 and the second body branch 19 are respectively provided on two adjacent spoke plates 302 of the wheel spoke 300.

Exemplarily, as shown in FIG. 12, the second insert 100B may be provided in the window region 301 between two adjacent spoke plates 302, and the first body branch 18 and the second body branch 19 are fixed to the two adjacent spoke plates 302, respectively.

Therefore, the aesthetic appearance of the second insert 100B installed on the vehicle wheel may be improved, and the installation is also relatively simple.

In one implementation, the first body branch 18 and the second body branch 19 tilt and extend outward in the direction away from the center of the vehicle wheel 1.

Exemplarily, parts of the first body branch 18 and the second body branch 19 are bent in the outside direction away from the wheel spoke, respectively, such that the protection portion 20, that is connected to the other end of the first body branch 18 and the other end of the second body branch 19, is located on the outside of the tire 400, thereby avoiding interference between the protection portion 20 and the tire 400, and enabling the protection portion 20 to shield the outer surface of the tire 400.

In one implementation, the length size and width size of the third insert 100C are smaller than the length size and width size of the second insert 100C. Herein, there are multiple third inserts 100C and multiple second insert 100B, and the multiple third inserts 100C and the multiple second insert 100B are arranged alternately in the circumference direction of the vehicle wheel 1.

Herein, the length sizes of the second insert 100B and the third insert 100C refer to the sizes of the second insert 100B and the third insert 100C in the radial direction of the vehicle wheel 1, and the width sizes of the second insert 100B and the third insert 100C refer to the sizes of the second insert 100B and the third insert 100C in the circumferential direction of the vehicle wheel 1.

Exemplarily, a part of the body 10 of the third insert 100C covers the spoke plate 302, and at least part of the protection portion 20 of the third insert 100C shields the outer surface of the tire 400. The shape and size of the body 10 of the third insert 100C may be provided with reference to the shape and size of the spoke plate 302.

The third embodiment of the protection device 1A is described below.

In the third embodiment, there are multiple inserts 100 and the multiple inserts 100 are spaced in the circumference direction of the vehicle wheel 1. Herein, the multiple inserts 100 are connected to each other and processed through an integrated molding process.

In an example, on the basis of the above first embodiment, the multiple inserts 100 are connected to each other and processed through the integrated molding process.

Specifically, the protection device 1A includes multiple first inserts 100A. The multiple first inserts 100A have the same shape and size, and are spaced in the circumference direction of the vehicle wheel 1. Herein, the bodies 10 of any two adjacent first inserts 100A are connected to each other, to enable the multiple first inserts 100A to form a ring-shape whole. Moreover, the multiple first inserts 100A may be integrally processed and formed through an injection molding process. Herein, the first insert 100A may adopt a structure that is same as or similar to the first insert 100A in the above first embodiment, which will not be repeated here.

In another example, on the basis of the second embodiment, the multiple inserts 100 are connected to each other and processed through the integrated molding process.

Specifically, multiple inserts 100 include multiple second inserts 100B and multiple third inserts 100C. The shape and size of the second inserts 100B all are different from the shape and size of the third inserts 100C, and the multiple second inserts 100B and the multiple third inserts 100C are alternately spaced in the circumference direction of the vehicle wheel 1. Herein, the bodies 10 of any adjacent second insert 100B and third insert 100C are connected to each other, such that the multiple second inserts 100B and the multiple third inserts 100C form a ring-shape whole. Moreover, the multiple second inserts 100B and the multiple third inserts 100C may be integrally processed and formed through an injection molding process. Herein, the second insert 100B may adopt a structure that is same as or similar to the second insert 100B in the above second embodiment, and the third insert 100C may adopt a structure that is same as or similar to the third insert 100C in the above second embodiment, which will not be repeated here.

Through the above implementation, multiple inserts 100 may form an interconnected overall structure, thereby simplifying the installation process of the protection device 1A on the wheel spoke or the wheel rim, and improving the stability and reliability of the overall structure of the protection device 1A.

As the third aspect of the embodiment of the present application, the embodiment of the present application also provides a vehicle wheel 1.

As shown in FIG. 1, the vehicle wheel 1 includes a wheel rim 200, a wheel spoke 300, a tire 400, and the protection device 1A according to the above embodiment of the present application.

Specifically, the tire 400 is sleeved on the outer circumference wall of the wheel rim 200, and the wheel spoke 300 is connected between the inner circumference wall 201 of the wheel rim 200 and the wheel hub 500. The insert 100 of the protection device 1A may be separately provided on the wheel rim 200, or separately provided on the wheel spoke 300, or provided on both the wheel rim 200 and the wheel spoke 300.

Exemplarily, a hollow window region 301 is formed between the inner circumference wall 201 of the wheel rim 200 and any two adj acent wheel spokes 300. The insert 100 is installed on the wheel spokes 300, and the body 10 of the insert 100 covers the window region 301. Herein, at least part of the protection portion 20 of the insert 100 covers the outer surface 401 of the tire 400.

For the vehicle wheel 1 according to the embodiment of the present application, by using the protection device 1A according to the above embodiment of the present application, when the vehicle wheel 1 is scratched, the probability of the tire 400 being damaged may be reduced, thereby forming a certain protection effect on the tire 400, and improving the reliability of the vehicle wheel 1 and the driving safety of the vehicle. Furthermore, by extending at least part of the protection portion 20 to a position directly opposite to the tire 400, the overall size of the insert 100 may be increased to a certain extent, thereby increasing the size of the vehicle wheel 1 visually and improving the aesthetic appearance of the vehicle wheel 1.

As shown in FIG. 1, in one implementation, the wheel spoke 300 includes multiple spoke plates 303, and a window region 301 is defined between the wheel rim 200 and any two adjacent spoke plates 303.

It can be understood that in the vehicle wheel 1, two ends of the wheel spoke 300 are respectively connected to the inner circumference wall 201 of the wheel rim 200 and the wheel hub 500 located in the center of the wheel rim 200, and the hollow window region 301 is formed between two adjacent wheel spokes 300 and the inner circumference wall 201 of the wheel rim 200. Therefore, on the one hand, the weight of the vehicle wheel 1 may be reduced, and on the other hand, it is beneficial for lateral airflow to flow through the window region 301, thereby reducing the wind obstruction of the lateral airflow on the vehicle wheel 1.

Exemplarily, the insert 100 may be provided on the wheel rim 200 and two adjacent wheel spokes 300 together, and the body 10 covers the window region 301 between the two adjacent wheel spokes 300, and a part of the protection portion 20 extends to a position directly opposite to the outer surface of the wheel, such that the protection portion 20 forms the shielding against the outer surface 401 of the tire 400.

Therefore, by means of covering the window region 301 by the body 10, the insert 100 may be roughly located in the window region 301. Therefore, the diameter size of the wheel rim 200 may be increased from a visual perspective, thereby further improving the aesthetic appearance of the vehicle wheel 1.

As shown in FIGS. 1, 3, and 4, in order to reduce the obstruction effect, formed by the insert 100, on the lateral airflow flowing through the window region 301, in one implementation, the body 10 and/or the protection portion 20 are defined with a stream guidance region 101. The stream guidance region 101 runs through the insert 100 in the thickness direction of the insert 100, such that the stream guidance region 101 is in communication with the window region 301 covered by the insert 100.

In an example, as shown in FIGS. 6 and 7, the stream guidance region 101 may be constructed as a closed-ring structure, that is, the structure of the body 10 is constructed to be approximately a ring shape. Specifically, the central region of the body 10 is provided with a first through hole 11. The first through hole 11 is provided to run through the body 10 in the thickness direction of the body 10. As shown in FIGS. 8 and 9, the protection portion 20 is provided with a second through hole 23, and the second through hole 23 is provided to run through the protection portion 20 in the thickness direction of the protection portion 20. More specifically, the second through hole 23 is provided on the first section 20A of the protection portion 20, and the second through hole 23 is provided directly opposite to the first through hole 11, such that the first through hole 11 and the second through hole 23 jointly form the stream guidance region 101 of the insert 100.

In another example, as shown in FIG. 10, the stream guidance region 101 may also be constructed as an open structure, that is, the body 10 is in a semi closed structure, to define the stream guidance region 101 with an opening.

According to the above implementation, by providing the stream guidance region 101 on the insert 100, and the stream guidance region 101 being in communication with the window region 301 of the vehicle wheel 1, the lateral airflow flowing through the vehicle wheel 1 may flow through the stream guidance region 101 and the window region 301, thereby ensuring the stream guiding effect of the vehicle wheel 1 on the lateral airflow and achieving the purpose of reducing the wind obstruction of the vehicle wheel 1.

In one implementation, as shown in FIG. 4, at least part of the circumference wall of the stream guidance region 101 tilts in the direction towards the center of the stream guidance region 101, to form a stream guidance face 102.

In other words, the circumference wall of the stream guidance region 101 tilts and extends along the direction towards the center of the stream guidance region 101 in the direction towards the vehicle wheel 1, such that the circumference wall of the stream guidance region 101 forms the stream guidance face 102, thereby forming a certain stream guiding effect on the lateral airflow.

Therefore, the stream guiding effect on the lateral airflow flowing towards the vehicle wheel 1 may be improved, thereby reducing the wind obstruction of the lateral airflow on the vehicle wheel 1 and improving the driving stability and safety of the vehicle.

As shown in FIGS. 3 and 4, optionally, a part of the circumference wall of the stream guidance region 101 protrudes in a direction towards the center of the stream guidance region 101, to form a stream-guide protrusion 103. Herein, the outer surface of the stream-guide protrusion 103 tilts in the direction towards the vehicle wheel 1, in the direction towards the center of the central through hole, to form a part of the stream guidance face 102.

In a specific example, the cross-sectional shape of the stream-guide protrusion 103 is approximately triangular, such that the cross-sectional shape of the stream guidance region 101 takes on a "heart" shape. Therefore, the aesthetic appearance of the insert 100 is improved.

As the fourth aspect of the embodiment of the present application, the embodiment of the present application provides a vehicle including the vehicle wheel 1 of the above embodiment of the present application.

The other components of the vehicle in the above embodiment may be employed in various technical solutions known to those skilled in the art now and in the future, and which will not be described in detail here.

In the description of this specification, it is necessary to understand that, the orientation or position relationship indicated by the terms "center," "longitudinal," "transverse," "length," "width," "thickness," "up," "down," "front," "back," "left," "right," "vertical," "horizontal," "top," "bottom," "inside," "outside," "clockwise," "anticlockwise," "axial," "radial," "circumferential," etc., is based on the orientation or position relationship shown in the drawings and is only for the convenience of describing the present application and simplifying the description, rather than indicating or implying that the referred apparatus or elements must have a specific orientation, be constructed and operated in a specific orientation, and therefore cannot be understood as a limitation of the present application.

Additionally, the terms "first" and "second" are used for descriptive purposes only and are not to be construed as indicating or implying relative importance or implicitly indicating the number of indicated technical features. Thus, features defining "first" and "second" may explicitly or implicitly include one or more of the features. In the description of the present application, "multiple" means two or more, unless expressly limited otherwise.

In the present application, unless otherwise explicitly specified and defined, the terms "installation," "joint," "connection," "fixation" and other terms shall be understood in a broad sense; they may be, for example a fixed connection, a detachable connection, or a whole body; they may also be a mechanical connection, an electrical connection, or a communication; they may also be direct connection, or indirect connection through an intermediate media; they may be the internal communication of two elements or the interaction relationship between two elements. Those skilled in the art may understand the specific meaning of the above terms in the present application according to the specific circumstances.

In the present application, unless otherwise explicitly specified and defined, the first feature "above" or "below" of the second feature may include direct contact between the first and second features, or may include contact between the first and second features, not directly, but through another feature between them. Moreover, the first feature "over," "above," and "on" the second feature includes the first feature directly above and obliquely above the second feature, or simply indicates that the first feature is higher in horizontal height than the second feature. The first feature "under," "below," and "underneath" the second feature includes the first feature directly below and obliquely below the second feature, or simply indicates that the first feature is lower in horizontal height than the second feature.

The above disclosure provides many different implementations or examples for implementing different structures of the present application. In order to simplify the disclosure of the present application, the components and settings in specific examples are described above. Of course, they are only examples and are not intended to limit the present application. In addition, the present application may repeat reference numbers and/or reference letters in different examples; the repetition is for the purpose of simplification and clarity, and does not in itself indicate the relationship between the various implementations and/or settings discussed.

The above description is only a specific implementation of the present application, but the protection scope of the present application is not limited thereto. Various alteration or replacement that may be easily conceived by any those skilled in the art within the technical scope disclosed by the present application shall fall within the protection scope of the present application. Therefore, the protection scope of the present application shall be subject to the protection scope of the claims.

## Claims

1. An insert, used for a vehicle wheel, wherein the vehicle wheel comprises a wheel rim, a wheel spoke, and a tire, and the insert comprises:
a body, provided on the wheel rim and/or the wheel spoke; and
a protection portion, provided on the body, wherein at least part of the protection portion shields an outer surface of the tire.

2. The insert of claim 1, wherein a material of the body is a hard material and a material of the protection portion is a soft material.

3. The insert of claim 2, wherein the body and the protection portion are integrally processed and formed through a double-shot injection molding process.

4. The insert of claim 1, wherein an arc-shaped transition face is formed between an inner circumference wall of the wheel rim and an outer surface of the wheel rim, the body or the protection portion is provided with a support protrusion, and an outer surface of the support protrusion is constructed as an arc shape, such that the outer surface of the support protrusion is attached to the transition face.

5. The insert of claim 4, wherein a groove is formed between the transition face and the outer surface of the tire, an embedding protrusion is formed on the outer surface of the support protrusion, and the embedding protrusion is clamped in the groove.

6. The insert of claim 4, wherein there are a plurality of support protrusions and the plurality of support protrusions are spaced along a circumference direction of the wheel rim.

7. The insert of claim 1, wherein the protection portion comprises a first section and a second section that are connected, wherein the first section covers an outer surface of the body, and at least part of the second section shields the outer surface of the tire.

8. The insert of claim 1, wherein the body is installed on the wheel spoke, wherein the body is connected to the wheel spoke through a fastener; and/or, a contact face of the body and a contact face of the wheel spoke are connected by adhesive.

9. The insert of claim 1, wherein an inner surface of the body is provided with a reinforcing rib.

10. A protection device, comprising at least one insert of any one of claims 1 to 9.

11. The protection device of claim 10, wherein there are a plurality of inserts and the plurality of inserts are spaced in a circumference direction of a vehicle wheel.

12. The protection device of claim 11, wherein the plurality of inserts have a same shape and size.

13. The protection device of claim 11, wherein any two adjacent inserts have different shapes and/or sizes.

14. The protection device of claim 11, wherein the plurality of inserts are connected to each other and processed through an integrated molding process.

15. A vehicle wheel, comprising:
a wheel rim, a wheel spoke, and a tire, wherein the tire is sleeved on an outer circumference wall of the wheel rim; and
the protection device of any one of claims 10 to 14.

16. The vehicle wheel of claim 15, wherein the wheel spoke comprises a plurality of spoke plates, a window region is defined between the wheel rim and any two adjacent spoke plates, a body and/or a protection portion are defined with a stream guidance region, and the stream guidance region runs through an insert in a thickness direction of the insert, such that the stream guidance region is in communication with the window region.

17. The vehicle wheel of claim 16, wherein at least part of a circumference wall of the stream guidance region tilts in a direction towards a center of the stream guidance region, to form a stream guidance face.

18. A vehicle, comprising the vehicle wheel of any one of claims 15 to 17.
